(19) **Europäisches Patentamt** / **European Patent Office** / **Office européen des brevets**

(11) **EP 3 988 338 B1**

(12) **EUROPEAN PATENT SPECIFICATION**

(45) Date of publication and mention
of the grant of the patent:
**22.11.2023 Bulletin 2023/47**

(21) Application number: **21202757.7**

(22) Date of filing: **14.10.2021**

(51) International Patent Classification (IPC):
***B60C 11/03*** *(2006.01)*     ***B60C 11/16*** *(2006.01)*

(52) Cooperative Patent Classification (CPC):
**B60C 11/0304; B60C 11/0306; B60C 11/16;**
B60C 2011/0344; B60C 2011/0346;
B60C 2011/0353; B60C 2011/0374; B60C 2200/04

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2020 JP 2020178251**

(43) Date of publication of application:
**27.04.2022 Bulletin 2022/17**

(73) Proprietor: **The Yokohama Rubber Co., Ltd.
Kanagawa Prefecture, 254-8601 (JP)**

(72) Inventor: **SAKAIRI, Shota
Hiratsuka-shi, 2548601 (JP)**

(74) Representative: **Dilg, Haeusler, Schindelmann
Patentanwaltsgesellschaft mbH
Leonrodstraße 58
80636 München (DE)**

(56) References cited:
**JP-B2- 4 556 682**

- **Anonymous: "RALLY SWEDEN :
HALF-A-MILLION STUDS!",
michelinmotorsport.com Michelin Motorsport, 1
January 2020 (2020-01-01), pages 1-2,
XP055850915, Retrieved from the Internet:
URL:https://michelinmotorsport.com/News/Ra
lly-Sweden-half-a-million-studs [retrieved on
2021-10-13]**
- **Dirtfish: "Studded Tires - Rally Sweden 2020
CHALLENGES", , 13 February 2020 (2020-02-13),
XP55896617, Retrieved from the Internet:
URL:https://www.youtube.com/watch?v=WG2tQ
U F6Qgg [retrieved on 2021-10-13]**

## Description

Technical Field

The present invention relates to a tire.

Background Art

For example, Patent Document 1 describes a tire (pneumatic tire) in which a plurality of blocks are formed in a tread and a plurality of pins are mounted on each block.

In the youtube-video https://www.youtube.com/watch?v=WG2tQUF6Qgg at 0:50 and 1:32 a studded tire with first and second block rows is disclosed.

Citation List

Patent Literature

Patent Document 1: JP 4556682 B

Summary of Invention

Technical Problem

Here, on icy and snowy road surfaces which are harder, improvement of pin drop resistance performance and improvement of steering stability performance on icy and snowy road surfaces are desired.

An object of the invention is to provide a tire with improved pin drop resistance performance and improved steering stability performance on icy and snowy road surfaces.

Solution to Problem

To achieve the object described above, a tire according to an aspect of the present invention includes a plurality of first blocks disposed in a first region on one side in a tire width direction demarcated by a tire equatorial plane in a tread portion, and a plurality of second blocks disposed in a second region on an other side in the tire width direction demarcated by the tire equatorial plane in the tread portion, stud pins being mounted in tire ground contact surfaces of the first blocks and the second blocks, the first blocks having a shape that is longer in a tire circumferential direction and forming circumferential rows in which a plurality of the first blocks are arranged side by side in the tire circumferential direction, the first blocks in each of the circumferential rows being arranged in a staggered manner in the tire width direction, and a circumferential groove provided between the circumferential rows being formed in a curvilinear manner.

Preferably, the plurality of second blocks have a shape that is longer in the tire width direction and are provided arranged side by side in the tire circumferential direction, the second blocks including one end intersecting with a tire ground contact edge and an other end terminating within the second region.

Preferably, first blocks located on an innermost side in the tire width direction with respect to the circumferential groove have a distance X1 from the tire equatorial plane to a groove wall of the circumferential groove closest to the tire equatorial plane in a range of $10\% \leq X1/TW \leq 35\%$ with respect to a tire ground contact width TW, and first blocks located on an outermost side in the tire width direction with respect to the circumferential groove have a distance X2 from the tire equatorial plane to a groove wall of the circumferential groove farthermost from the tire equatorial plane in a range of $16\% \leq X2/TW \leq 40\%$ with respect to the tire ground contact width TW.

Preferably, the first blocks include two circumferential rows, for a circumferential row close to the tire equatorial plane, a shortest distance from the tire equatorial plane is D1 and a staggering offset in the tire width direction is Db1, for a circumferential row far from the tire equatorial plane, a shortest distance from the tire equatorial plane is D2 and a staggering offset in the tire width direction is Db2, and, with respect to the tire ground contact width TW, a relationship:

$$0\% < Db1/TW \leq 15\%,$$

$$0\% < Db2/TW \leq 15\%,$$

$$0\% \leq D1/TW \leq 25\%,$$

and

$$15\% \leq D2/TW \leq 39\%$$

is satisfied.

Preferably, the first blocks have a maximum ground contact width Wb1 in the tire width direction which satisfies a relationship $10\% \leq Wb1/TW \leq 25\%$ with respect to a tire ground contact width TW.

Preferably, the first blocks have a maximum ground contact length Lb1 in the tire circumferential direction which satisfies a relationship $45\% \leq Lb1/P1 \leq 95\%$ with respect to a pitch P1 in the tire circumferential direction.

Preferably, the first blocks include an edge portion in the tire width direction, the edge portion including a step portion offsetting in the tire width direction, a maximum ground contact width Wb1 of the first blocks in the tire width direction and a projecting width G1 of the step portion satisfy a relationship $1\% \leq G1/Wb1 \leq 40\%$, and a maximum ground contact length Lb1 of the first blocks in the tire circumferential direction and a projecting length Le1 of the step portion satisfy a relationship $1\% \leq Le1/Lb1$

≤ 50%.

Preferably, the second blocks have a zigzag shape in an extension direction and have a constant width.

Advantageous Effects of Invention

According to embodiments of the present invention, pin drop resistance performance and steering stability performance on icy and snowy road surfaces can be improved.

Brief Description of Drawings

FIG. 1 is a meridian cross-sectional view of a pneumatic tire according to an embodiment.
FIG. 2 is a plan view of a portion of a pneumatic tire according to an embodiment.
FIG. 3 is a partial enlarged plan view of a pneumatic tire according to an embodiment.
FIG. 4 is a partial enlarged plan view of a pneumatic tire according to an embodiment.
FIG. 5 is a partial enlarged plan view of a pneumatic tire according to an embodiment.
FIG. 6 is a table showing the results of performance tests of pneumatic tires according to embodiments.

Description of Embodiments

Pneumatic tires according to embodiments of the present invention are described in detail below with reference to the drawings.

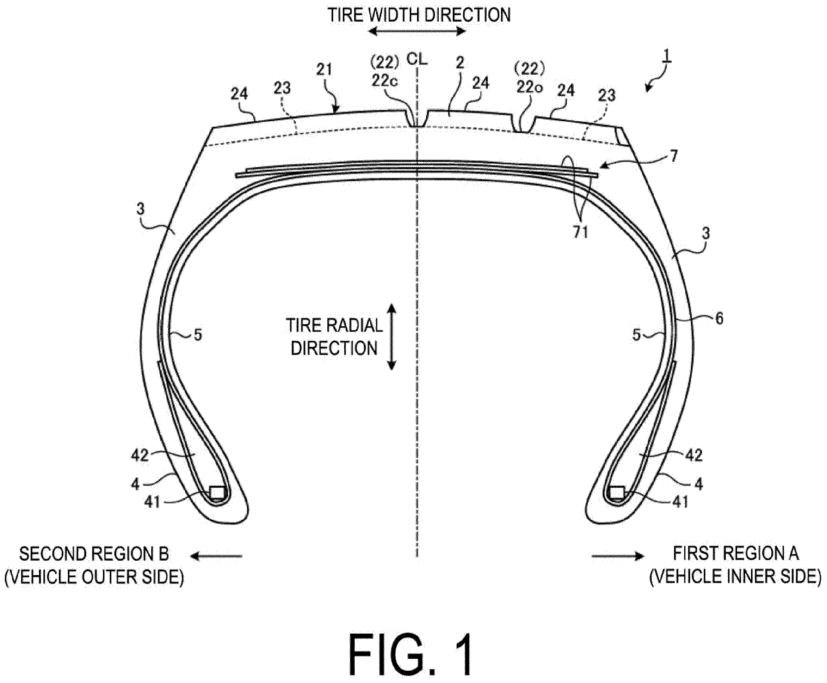

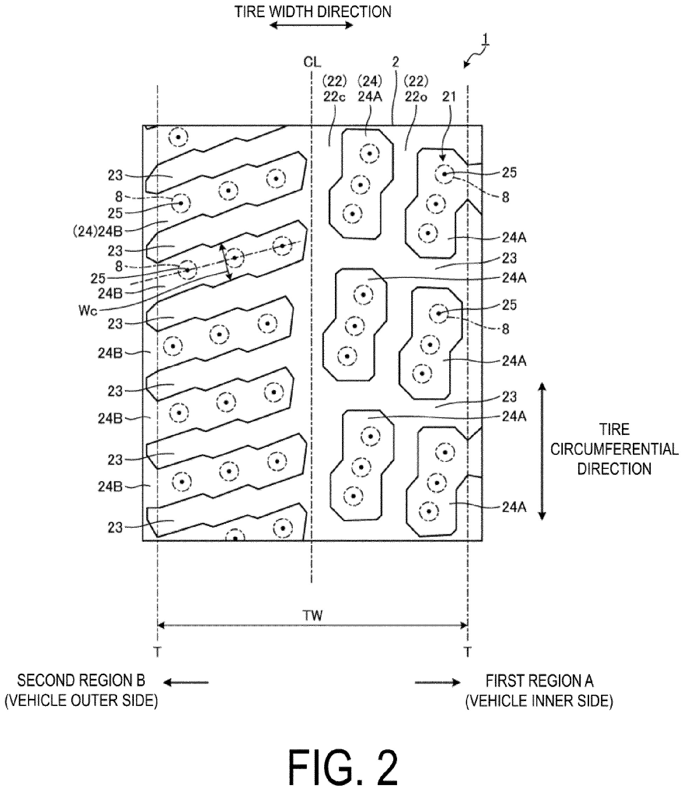

FIG. 1 is a meridian cross-sectional view of a pneumatic tire according to an embodiment. FIG. 2 is a plan view of a portion of a pneumatic tire according to an embodiment.

In the following description, a description will be given using a pneumatic tire 1 as an example of the tire according to the embodiments of the present invention. The pneumatic tire 1 as an example of the tire can be inflated with any gas including air and inert gas, such as nitrogen.

In the following description, the term "tire radial direction" refers to a direction orthogonal to the tire rotation axis (not illustrated) which is a rotation axis of a pneumatic tire 1, the term "inner side in the tire radial direction" refers to a side toward the tire rotation axis in the tire radial direction, and the term "outer side in the tire radial direction" refers to a side away from the tire rotation axis in the tire radial direction. The term "tire circumferential direction" refers to a circumferential direction with the tire rotation axis as a center axis. Additionally, the term "tire width direction" refers to a direction parallel with the tire rotation axis, the term "inner side in the tire width direction" refers to a side toward a tire equatorial plane (tire equatorial line) CL in the tire width direction, and the term "outer side in the tire width direction" refers to a side away from the tire equatorial plane CL in the tire width direction. The term "tire equatorial plane CL" refers to a plane that is orthogonal to the tire rotation axis and that runs through the center of the tire width of the pneumatic tire 1. The tire equatorial plane CL aligns, in a position in the tire width direction, with a center line in the tire width direction corresponding to a center position of the pneumatic tire 1 in the tire width direction. The tire width is the width in the tire width direction between portions located on the outermost sides in the tire width direction, or in other words, the distance between the portions that are the most distant from the tire equatorial plane CL in the tire width direction. The term "tire equator line" refers to a line in the tire circumferential direction of the pneumatic tire 1 that lies on the tire equatorial plane CL.

In the embodiment, the pneumatic tire 1 is a winter tire (snow tire) including stud pins 8.

As illustrated in FIG. 1, the pneumatic tire 1 includes a tread portion 2, a sidewall portion 3, a bead portion 4, and an innerliner 5. Furthermore, the pneumatic tire 1 includes a carcass layer 6 and a belt layer 7 as internal structures.

When the pneumatic tire 1 is viewed in a meridian cross-section, the tread portion 2 is provided in an outermost portion in the tire radial direction. The tread portion 2 is formed of a rubber composition. A surface of the tread portion 2, that is, a portion in contact with a road surface during driving of a vehicle (not illustrated) having the pneumatic tire 1 mounted thereon is formed as a tire ground contact surface 21, and forms a portion of a contour of the pneumatic tire 1. In a tire ground contact surface 21 of the tread portion 2, a plurality of circumferential grooves 22 extending in the tire circumferential direction and a plurality of width direction grooves 23 extending in the tire width direction are formed. The plurality of circumferential grooves 22 are disposed side by side in the tire width direction, the plurality of width direction grooves 23 are disposed side by side in the tire circumferential direction, and the circumferential grooves 22 and the width direction grooves 23 define a plurality of blocks 24 forming land portions in the tread portion 2. The blocks 24 include a tire ground contact surface 21 on their surfaces.

The sidewall portion 3 is provided extending inner side in the radial direction at each outer side end of the tread portion 2 in the tire width direction. The sidewall portion 3 is formed of a rubber composition. The sidewall portion 3 forms a portion that is exposed at an outermost side in the tire width direction on each side of the pneumatic tire 1 in the tire width direction.

The bead portion 4 is provided on inner side of each sidewall portion 3 in the tire radial direction. Each bead portion 4 includes a bead core 41 and a bead filler 42. The bead core 41 is an annular member formed in an annular shape in the tire circumferential direction by bundling bead wires that are steel wires. The bead filler 42 is a rubber composition disposed on an outer side of the bead core 41 in the tire radial direction.

The innerliner 5 is provided along inner side of the tread portion 2, the sidewall portion 3, and the bead portion 4 and forms a tire inner surface that is a surface on an inner side of the pneumatic tire 1.

Each end of the carcass layer 6 in the tire width direction are folded back around each of a pair of bead cores 41 in the bead portion 4 from an inner side to an outer side in the tire width direction, and the carcass layer 6 is stretched in a toroidal shape in the tire circumferential direction forming the framework of the tire. The carcass layer 6 is made of coating rubber-covered carcass cords (not illustrated) disposed side by side with an angle with respect to the tire circumferential direction along the tire meridian direction at an angle with respect to the tire circumferential direction. The carcass cords are made of organic fibers (e.g., polyester, rayon, nylon, and the like). The carcass layer 6 is provided with at least one layer.

The belt layer 7 has a multilayer structure in which at least two belts 71 are layered. In the tread portion 2, the belt layer 7 is disposed on the outer side of the carcass layer 6 in the tire radial direction, i.e. on the outer circumference thereof, and covers the carcass layer 6 in the tire circumferential direction. The belts 71 are made of coating rubber-covered cords (not illustrated) disposed side by side at a predetermined angle with respect to the tire circumferential direction. The cords are made of steel or organic fibers (polyester, rayon, nylon, or the like). Moreover, the belts 71 overlap each other and are disposed so that the direction of the cords of the respective belts intersect each other.

The pneumatic tire 1 of the embodiment includes stud pins 8. Stud holes 25 are formed in the tire ground contact surface 21 of each block 24 of the tread portion 2. A stud pin 8 is inserted into a stud hole 25, and a portion of the stud pin 8 protrudes from the tire ground contact surface 21. The stud holes 25 are formed, for example, with the block 24 in a vulcanization step which is one of manufacturing steps of the pneumatic tire 1. Alternatively, the stud holes 25 may be formed, for example, by conducting processing of the tire ground contact surface 21 of the block 24 with a drill or the like after the vulcanization step. A plurality of stud pins 8 (stud holes 25) are disposed at the center of the width of each block 24 in an extension direction at equal intervals along the longitudinal extension direction.

In the pneumatic tire 1 of the embodiment, the tread portion 2 has, demarcated by the tire equatorial plane CL, one side in the tire width direction being a first region A and an other side in the tire width direction being a second region B.

The pneumatic tire 1 of the embodiment has a specified mounting direction with respect to the vehicle. In other words, when the pneumatic tire 1 of the present embodiment is mounted on the vehicle, the orientation with respect to the outer side and the inner side of the vehicle in the tire width direction is designated. The orientation designations, while not illustrated in the drawings, for example, can be shown by indicators provided on the sidewall portions 3. And thus, when the tire is mounted on the vehicle, the side facing the outer side of the vehicle is the "vehicle outer side" and the side facing the inner side of the vehicle is the "vehicle inner side". Note that the designations of the vehicle outer side and the vehicle inner side are not limited to cases when mounted on the vehicle. For example, in cases when the tire is mounted on a rim, orientation of the rim with respect to the outer side and the inner side of the vehicle in the tire width direction is predetermined. Thus, in cases in which the pneumatic tire 1 is mounted on a rim, the orientation with respect to the vehicle outer side and the vehicle inner side in the tire width direction is designated.

In the pneumatic tire 1 of the embodiment, the first region A of the tread portion 2 is disposed on the vehicle inner side, and the second region B is disposed on the vehicle outer side. The tread portion 2 has a tread pattern formed being asymmetric with respect to the tire equatorial plane CL.

A plurality of first blocks 24A (24) are provided in the first region A. Further, a plurality of second blocks 24B (24) are provided in the second region B. The pneumatic tire 1 of the embodiment has a circumferential groove 22 (hereinafter also referred to as "central circumferential groove 22c") formed along the tire equatorial plane CL, with blocks 24 provided on the first region A side demarcated by the central circumferential groove 22c on the tire equatorial plane CL being the first blocks 24A and blocks 24 provided on the second region B side demarcated by the central circumferential groove 22c on the tire equatorial plane CL being the second blocks 24B.

In the first region A, the first blocks 24A are formed separated from each other in the tire width direction by the central circumferential groove 22c on the tire equatorial plane CL and a circumferential groove 22 (hereinafter, also referred to as "outer circumferential groove 22o") provided on the outer side of the central circumferential groove 22c in the tire width direction. Additionally, the first blocks 24A are formed separated from each other in the tire circumferential direction by width direction grooves 23. A width direction groove 23 is provided with one end extending in the tire width direction connected to the central circumferential groove 22c, and an other end opening to an outer side end of the tread portion 2 in the tire width direction. Accordingly, the first blocks 24A form a plurality of circumferential rows arranged side by side in the tire circumferential direction.

The first block 24A has a shape that is longer in the tire circumferential direction. In other words, the first block 24A has a shape with a dimension in the tire circumferential direction greater than a dimension in the tire width direction. Additionally, the first blocks 24A in one circumferential row is disposed side by side in the tire circumferential direction and disposed in a staggered manner and in the tire width direction. Additionally, the outer circumferential groove 22o between a plurality of (two in the embodiment) circumferential rows of the first blocks 24A arranged side by side in the tire width direction is formed extending in the tire circumferential direction and curvilinearly offsetting in the tire width direction.

According to the pneumatic tire 1 of the embodiment, the shape and arrangement of the first blocks 24A described above can ensure a strong rigidity with respect to flexing in the tire circumferential direction and the tire width direction. As a result, the pneumatic tire 1 of the embodiment can suppress dropping of the stud pins 8 while traveling and improve the pin drop resistance performance. Additionally, in the first blocks 24A, the number of disposing of the stud pins 8 in the tire ground contact surface 21 is greater in the longitudinal direction. Also, the outer circumferential groove 22o between a plurality of circumferential rows of the first blocks 24A is formed extending in the tire circumferential direction and curvilinearly offsetting in the tire width direction, and thus the first blocks 24A are disposed to be inclined with respect to the tire circumferential direction and the stud pins 8 can be disposed dispersed in the tire width direction. As a result, the pneumatic tire 1 of the embodiment can improve the steering stability performance on icy and snowy road surfaces.

In the second region B, the second block 24B has a shape that is longer in the tire width direction. In other words, the second block 24B has a shape with a dimension in the tire width direction greater than a dimension in the tire circumferential direction. Additionally, the second block 24B is formed continuously from the tire ground contact edge T on the second region B side toward the tire equatorial plane CL. The second block 24B has one end intersecting with the tire ground contact edge T and an other end terminating in the second region B and extending to the central circumferential groove 22c. The plurality of second blocks 24B are provided arranged side by side in the tire circumferential direction. Accordingly, a width direction groove 23 formed between the second blocks 24B in the tire circumferential direction is continuous in the tire width direction in the second region B and has one end opening at the tire ground contact edge T and an other end being formed in communication with the central circumferential groove 22c.

Here, "tire ground contact edge T" refers to both outermost edges in the tire width direction in a region in which the tire ground contact surface 21 of the tread portion 2 of the pneumatic tire 1 contacts the road surface (horizontal surface) with the pneumatic tire 1 mounted on a regular rim, inflated to a regular internal pressure, and loaded with 70% of a regular load. Both outermost edges are continuous in the tire circumferential direction. A dimension between the tire ground contact edges T in the tire width direction is referred to as a tire ground contact width TW. Here, "regular rim" refers to a "standard rim" defined by the Japan Automobile Tyre Manufacturers Association Inc. (JATMA), a "design rim" defined by the Tire and Rim Association, Inc. (TRA), or a "measuring rim" defined by the European Tyre and Rim Technical Organisation (ETRTO). "Regular internal pressure" refers to a "maximum air pressure" defined by JATMA, the maximum value in "TIRE LOAD LIMITS AT VARIOUS COLD INFLATION PRESSURES" defined by TRA, or "INFLATION PRESSURES" defined by ETRTO. "Regular load" refers to a "maximum load capacity" defined by JATMA, the maximum value in "TIRE LOAD LIMITS AT VARIOUS COLD INFLATION PRESSURES" defined by TRA, or "LOAD CAPACITY" defined by ETRTO.

According to the pneumatic tire 1 of the embodiment, the shape and arrangement of the first blocks 24A in the first region A described above as well as the shape and arrangement of the second blocks 24B in the second region B can ensure, when traveling straight and during cornering of the vehicle on which the pneumatic tire 1 of the embodiment is mounted, a strong rigidity of the tread portion 2 as a whole with respect to flexing in the tire circumferential direction and the tire width direction. As a result, the pneumatic tire 1 of the embodiment can suppress dropping of the stud pins 8 while traveling and improve the pin drop resistance performance. Also, according to the pneumatic tire 1 of the embodiment, in the second blocks 24B, the number of disposing of the stud pins 8 in the tire ground contact surface 21 is greater in the longitudinal tire width direction. As a result, the pneumatic tire 1 of the embodiment can further improve, synergistic with the fact that the number of disposing of the stud pins 8 in the first blocks 24A is increased in the tire circumferential direction, the steering stability performance on icy and snowy road surfaces. Also, terminating the second block 24B in the second region B can ensure the central circumferential groove 22c to be provided on the tire equatorial plane CL. As a result, the pneumatic tire 1 of the embodiment can improve snow discharge performance on the tire equatorial plane CL that is effective for snow discharge, and can further improve the steering stability performance on icy and snowy road surfaces. Further, the pneumatic tire 1 of the embodiment has one end of the width direction groove 23 opening at the tire ground contact edge T and an other end being formed in communication with the central circumferential groove 22c, and thus the snow discharge performance can be improved and the steering stability performance on icy and snowy road surfaces can be further improved.

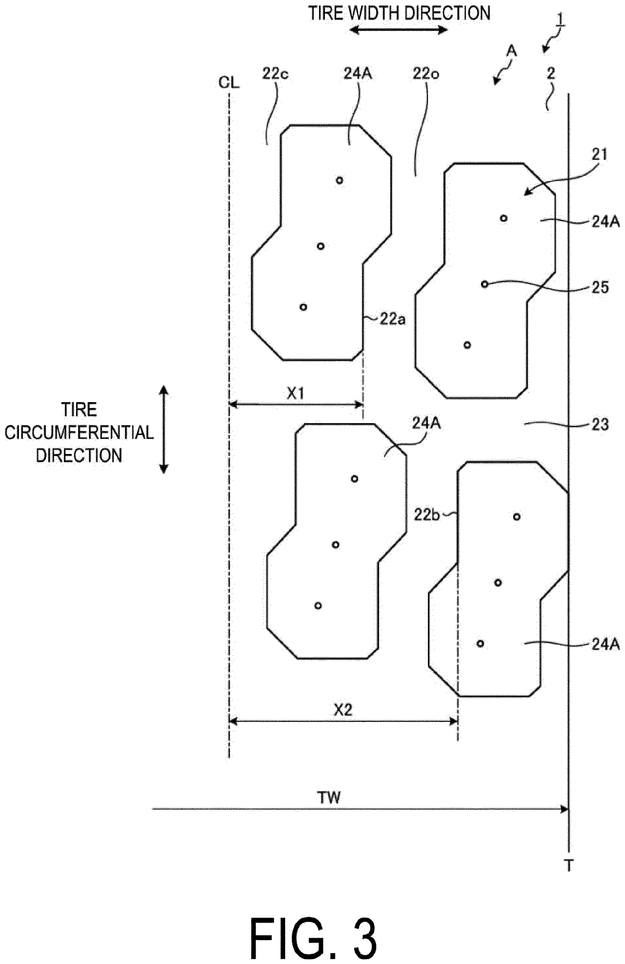

FIG. 3 is a partial enlarged plan view of a pneumatic tire according to an embodiment.

As illustrated in FIG. 3, according to the pneumatic tire 1 of the embodiment, in the first blocks 24A, first blocks 24A located on an innermost side of the outer circumferential groove 22o in the tire width direction have a distance X1 from the tire equatorial plane CL to a groove wall 22a of the outer circumferential groove 22o closest to the tire equatorial plane CL in a range of $10\% \le X1/TW \le 35\%$ with respect to the tire ground contact width TW. Also in the first blocks 24A, first blocks 24A located on an outermost side of the outer circumferential groove 22o in the tire width direction have a distance X2 from the tire equatorial plane CL to a groove wall 22b of the outer circumferential groove 22o farthermost from the tire equatorial plane CL in a range of 16% ≤ X2/TW ≤ 40% with respect to the tire ground contact width TW. The positions of the groove walls 22a and 22b of the outer circumferential groove 22o are positions at the tire ground contact surface 21, and is also positions of edge portions of the tire ground contact surface 21 of the first blocks 24A. Note that the distances X1 and X2 of the first blocks 24A are in a relationship X1 < X2.

According to the pneumatic tire 1 of the embodiment, for each of the first blocks 24A located on the innermost side and the outermost side of the outer circumferential groove 22o in the tire width direction, by making the distances X1 and X2 between positions of ends of the tire ground contact surface 21 based on the outer circumferential groove 22o and the tire equatorial plane CL being within the range described above with respect to the tire ground contact width TW, balance of the arrangement of the stud pins 8 in each of the first blocks 24A can be made suitable. As a result, the pneumatic tire 1 of the embodiment can improve the steering stability performance on icy and snowy road surfaces.

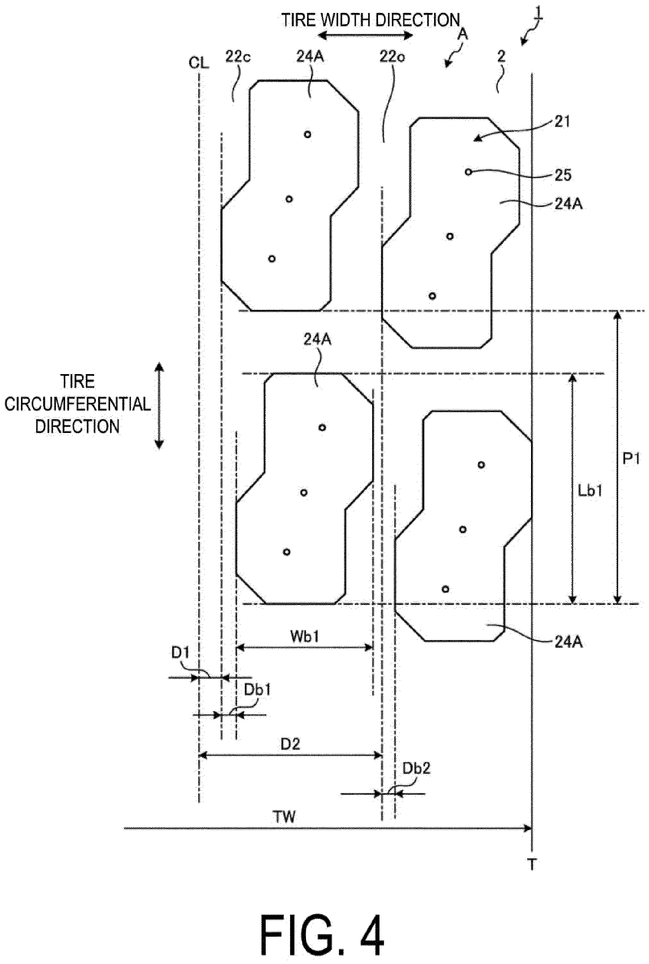

FIG. 4 is a partial enlarged plan view of a pneumatic tire according to an embodiment.

As illustrated in FIG. 4, in the pneumatic tire 1 of the embodiment, the first block 24A includes two circumferential rows as described above. And the shortest distance from the tire equatorial plane CL to the circumferential row close to the tire equatorial plane CL is denoted as D1, and a staggering offset in the tire width direction is denoted as Db1. Also, the shortest distance from the tire equatorial plane CL to the circumferential row far from the tire equatorial plane CL is denoted as D2, and a staggering offset in the tire width direction is denoted as Db2. In this case, Db1, Db2, D1, and D2 satisfy a relationship 0% < Db1/TW ≤ 15%, 0% < Db2/TW ≤ 15%, 0% ≤ D1/TW ≤ 25%, and 15% ≤ D2/TW ≤ 39% with respect to the tire ground contact width TW.

According to the pneumatic tire 1 of the embodiment, the relationship between Db1, Db2, D1, and D2 with respect to the tire ground contact width TW causes the first blocks 24A being disposed at different distances from each other with respect to the tire equatorial plane CL. Here, by increasing the Db1 and the Db2 with respect to the tire ground contact width TW, overlap of the stud pins 8 in the tire circumferential direction can be suppressed and the steering stability performance on icy and snowy road surfaces can be improved. In addition, because Db1 and Db2 are not too large with respect to the tire ground contact width TW, separation of the circumferential grooves 22 in the tire width direction is suppressed, and reduction in the snow discharge performance is suppressed. Additionally, by increasing the D1 and D2 with respect to the tire ground contact width TW, the arrangement of the stud pins 8 in the first region A is ensured, and the D1 and D2 being not too large with respect to the tire ground contact width TW allows the arrangement of the stud pins 8 in the second region B to be ensured and the steering stability performance on icy and snowy road surfaces to be improved.

Note that the relationship of Db1, Db2, D1, and D2 with respect to the tire ground contact width TW preferably satisfies a relationship 0% < Db1/TW ≤ 6%, 0% < Db2/TW ≤ 6%, 0% ≤ D1/TW ≤ 5%, and 17% ≤ D2/TW ≤ 24% to obtain the effect described above significantly. Additionally, to obtain the effect described above more significantly, the relationship between Db1, Db2, D1, and D2 with respect to the tire ground contact width TW preferably satisfies a relationship 1% ≤ Db1/TW ≤ 2%, 1% ≤ Db2/TW ≤ 2%, 2% ≤ D1/TW ≤ 3%, and 22% ≤ D2/TW ≤ 23%.

Additionally, as illustrated in FIG. 4, in the pneumatic tire 1 of the embodiment, the first blocks 24A have a maximum ground contact width Wb1 in the tire width direction which satisfies a relationship 10% ≤ Wb1/TW ≤ 25% with respect to the tire ground contact width TW.

According to the pneumatic tire 1 of the embodiment, by increasing the maximum ground contact width Wb1 with respect to the tire ground contact width TW, flexing of the first blocks 24A can be suppressed and the pin drop resistance performance of the stud pins 8 can be improved. In addition, because the maximum ground contact width Wb1 are not too large with respect to the tire ground contact width TW, a groove area of the circumferential groove 22 is ensured, and reduction in the snow discharge performance is suppressed. As a result, the pneumatic tire 1 of the embodiment can further improve the pin drop resistance performance and the steering stability performance on icy and snowy road surfaces.

Note that the relationship of the maximum ground contact width Wb1 with respect to the tire ground contact width TW preferably satisfies a relationship 9% ≤ Wb1/TW ≤ 19% in order to further improve the pin drop resistance performance and the steering stability performance on icy and snowy road surfaces. Also, the relationship of the maximum ground contact width Wb1 with respect to the tire ground contact width TW preferably satisfies a relationship 16% ≤ Wb1/TW ≤ 17% in order to yet further improve the pin drop resistance performance and the steering stability performance on icy and snowy road surfaces.

Additionally, as illustrated in FIG. 4, in the pneumatic tire 1 of the embodiment, the first blocks 24A have a maximum ground contact length Lb1 in the tire circumferential direction which satisfies a relationship 45% ≤ Lb1/P1 ≤ 95% with respect to a pitch P1 of the first blocks 24A in the tire circumferential direction.

According to the pneumatic tire 1 of the embodiment, by increasing the maximum ground contact length Lb1 with respect to the pitch P1, rigidity of the first blocks 24A in the tire circumferential direction can be ensured and flexing of the first blocks 24A can be suppressed and the pin drop resistance performance of the stud pins 8 can be improved. In addition, because the maximum ground contact length Lb1 are not too large with respect to the pitch P1, a groove area of the width direction groove 23 in between the tire circumferential direction is ensured, and reduction in the snow discharge performance is suppressed. As a result, the pneumatic tire 1 of the embodiment can further improve the pin drop resistance performance and the steering stability performance on icy and snowy road surfaces.

Note that the relationship of the maximum ground contact length Lb1 with respect to the pitch P1 preferably satisfies a relationship $50\% \leq Lb1/P1 \leq 91\%$ in order to further improve the pin drop resistance performance and the steering stability performance on icy and snowy road surfaces. Also, the relationship of the maximum ground contact length Lb1 with respect to the pitch P1 preferably satisfies a relationship $75\% \leq Lb1/P1 \leq 85\%$ in order to yet further improve the pin drop resistance performance and the steering stability performance on icy and snowy road surfaces.

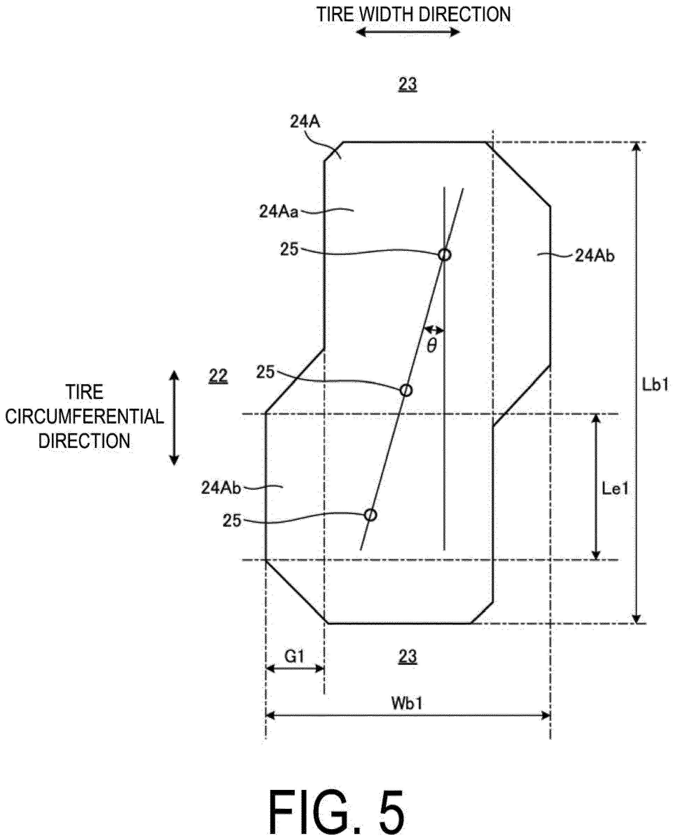

FIG. 5 is a partial enlarged plan view of a pneumatic tire according to an embodiment.

As illustrated in FIG. 5, in the pneumatic tire 1 of the embodiment, the first block 24A includes edge portions in the tire width direction which include step portions 24Ab that are offset in the tire width direction on one side and an other side in the tire circumferential direction. Specifically, the first block 24A includes a rectangular base portion 24Aa that is longer in the tire circumferential direction. And the first block 24A includes step portions 24Ab that project toward opposing sides in the tire width direction on one side and an other side of the base portion 24Aa in the tire circumferential direction. As a result, the first block 24A includes step portions 24Ab that are offset in the tire width direction. The step portions 24Ab project obliquely in the tire circumferential direction from the rectangular base portion 24Aa and include edge portions, which is projecting farthest, are formed along the tire circumferential direction.

And, as illustrated in FIG. 5, in the pneumatic tire 1 of the embodiment, the maximum ground contact width Wb1 of the first block 24A in the tire width direction and a projecting width G1 of the step portion 24Ab in the tire width direction satisfy a relationship $1\% \leq G1/Wb1 \leq 40\%$. Additionally, in the pneumatic tire 1 of the embodiment, the maximum ground contact length Lb1 of the first block 24A in the tire circumferential direction and a projecting length Le1 of the step portion 24Ab in the tire circumferential direction satisfy a relationship $1\% \leq Le1/Lb1 \leq 50\%$.

According to the pneumatic tire 1 of the embodiment, by increasing the projecting width G1 with respect to the maximum ground contact width Wb1, rigidity of the first blocks 24A in the tire width direction can be ensured and flexing of the first blocks 24A can be suppressed and the pin drop resistance performance of the stud pins 8 can be improved. In addition, because the projecting width G1 are not too large with respect to the maximum ground contact width Wb 1, a groove area of the circumferential grooves 22 in between the tire width direction is ensured, and reduction in the snow discharge performance is suppressed. As a result, the pneumatic tire 1 of the embodiment can further improve the pin drop resistance performance and the steering stability performance on icy and snowy road surfaces. Also, by increasing the projecting length Le1 with respect to the maximum ground contact length Lb1, rigidity of the first blocks 24A in the tire circumferential direction can be ensured and flexing of the first blocks 24A can be suppressed and the pin drop resistance performance of the stud pins 8 can be improved. Because the projecting length Le1 are not too large with respect to the maximum ground contact length Lb 1, a groove area of the circumferential grooves 22 in between the tire width direction is ensured, and reduction in the snow discharge performance is suppressed. As a result, the pneumatic tire 1 of the embodiment can further improve the pin drop resistance performance and the steering stability performance on icy and snowy road surfaces.

Note that the relationship of the projecting width G1 with respect to the maximum ground contact width Wb1 preferably satisfies a relationship $2\% \leq G1/Wb1 \leq 35\%$ in order to further improve the pin drop resistance performance and the steering stability performance on icy and snowy road surfaces. Also, the relationship of the projecting width G1 with respect to the maximum ground contact width Wb 1 preferably satisfies a relationship $18\% \leq G1/Wb 1 \leq 21\%$ in order to yet further improve the pin drop resistance performance and the steering stability performance on icy and snowy road surfaces. Also, the relationship of the projecting length Le1 with respect to the maximum ground contact length Lb1 preferably satisfies a relationship $10\% \leq Le1/Lb1 \leq 50\%$ in order to further improve the pin drop resistance performance and the steering stability performance on icy and snowy road surfaces. Also, the relationship of the projecting length Le1 with respect to the maximum ground contact length Lb1 preferably satisfies a relationship $30\% \leq Le1/Lb1 \leq 50\%$ in order to yet further improve the pin drop resistance performance and the steering stability performance on icy and snowy road surfaces.

Incidentally, as illustrated in FIG. 5, in the pneumatic tire 1 of the embodiment, the first block 24A includes the step portion 24Ab described above, and thus, as a whole, has an arrangement that is inclined in the tire circumferential direction. Along the inclined arrangement, a plurality of stud holes 25 in which stud pins 8 are disposed are arranged inclined in the tire circumferential direction. The angle θ of the stud holes 25 (stud pins 8) that is inclined in the tire circumferential direction is preferably in the range of $3° \leq θ \leq 45°$. By increasing the angle θ, overlapping of the arrangement of the stud pins 8 in the tire circumferential direction can be suppressed and the steering stability performance on icy and snowy road surfaces can be improved. In addition, because the angle θ is not too large, rigidity of the first blocks 24A in the tire circumferential direction can be ensured and flexing of the first blocks 24A can be suppressed and the pin drop resistance performance of the stud pins 8 can be improved. The angle θ is preferably in the range of 15°

$\leq \theta \leq 20°$ in order to further improve the pin drop resistance performance and the steering stability performance on icy and snowy road surfaces.

As illustrated in FIG. 2, in the pneumatic tire 1 of the embodiment, the second blocks 24B have a zigzag shape in an extension direction and have a constant width Wc. The extension direction of the second block 24B is inclined with respect to the tire width direction, and a plurality of stud holes 25 in which the stud pins 8 are disposed at the center of the width Wc are disposed along the extension direction. In the extension direction, the second blocks 24B have a zigzag shape in the tire circumferential direction.

According to the pneumatic tire 1 of the embodiment, by forming the second blocks 24B having a zigzag shape, the edge effect is increased and the steering stability performance on icy and snowy road surfaces can be improved. Additionally, according to the pneumatic tire 1 of the embodiment, by setting the width Wc of the second blocks 24B constant in the extension direction, the ground contact pressure at each portion in the extension direction of the second blocks 24B is made uniform, and at the same time, the deformation of the second blocks 24B is also uniform, so the pin drop resistance can be improved.

In the embodiments, as described above, a pneumatic tire 1 is described as an example of a tire. However, no such limitation is intended, and the configurations described in the embodiments can also be applied to other tires in a discretionary manner within the scope of obviousness to one skilled in the art. Examples of other tires include an airless tire, for example.

Examples

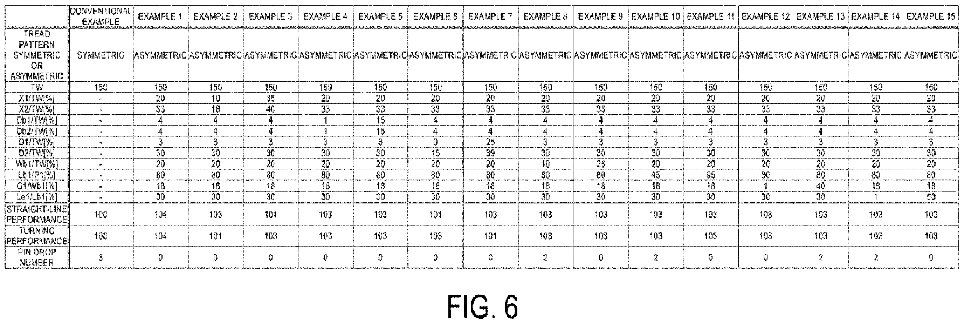

FIG. 6 is a table showing the results of performance tests of pneumatic tires according to embodiments. Hereinafter, evaluation tests of performance conducted on pneumatic tires of Conventional Example and the pneumatic tires according to the embodiments will be described. The performance evaluation test was performed on the straight-line performance and the turning performance, which are the steering stability performance on icy and snowy road surfaces, and the pin drop number, which is the pin drop resistance performance.

Evaluations were conducted under a test condition in which test tires having a tire size of 150/650R15 are mounted on rims having a rim size of 15×7J, inflated to an internal pressure (200 kPa), mounted on a test vehicle (a four wheel drive vehicle equipped with a 1600 cc class engine with a supercharger), and travelled on a test course with icy and snowy road surfaces for 200 km. Additionally, the tire ground contact width is the maximum width of the ground contact shape of the test tire described above measured with a load of 4.0 kN being applied.

In the evaluation method for the straight-line performance and the turning performance (steering stability performance on icy and snowy road surfaces), sensory evaluation by a driver at the traveling described above is quantified. The results are expressed as index values and evaluated, with the results of Conventional Example being assigned as the reference (100). Larger values indicate superior straight-line performance and turning performance.

In the evaluation method for the pin drop number (pin drop resistance performance), the number of stud pins dropped after the traveling described above was checked as an actual value. In the evaluation, smaller values indicate superior pin drop resistance performance.

The pneumatic tire of Conventional Example is described in Patent Document 1.

On the other hand, the pneumatic tires of Examples have the tread pattern illustrated in FIG. 2.

As can be seen from the test results, in the pneumatic tires of Examples, the straight-line performance and the turning performance as well as the pin drop resistance performance are improved with respect to Conventional Example.

Reference Signs List

    1 Pneumatic tire (tire)
    2 Tread portion
    8 Stud pin
    21 Tire ground contact surface
    22 Circumferential groove
    22a Groove wall
    22b Groove wall
    24A First block
    24B Second block
    24Ab Step portion
    A First region
    B Second region
    CL Tire equatorial plane
    TW Tire ground contact width

**Claims**

1. A tire (1), comprising:

    a plurality of first blocks (24A) disposed in a first region (A) on one side in a tire width direction demarcated by a tire equatorial plane (CL) in a tread portion (2); and
    a plurality of second blocks (24B) disposed in a second region (B) on an other side in the tire width direction demarcated by the tire equatorial plane (CL) in the tread portion (2),
    stud pins (8) being mounted in tire ground contact surfaces (21) of the first blocks (24A) and the second blocks (24B), a plurality of stud holes

(25) in which the stud pins (8) of the first blocks (24A) are disposed being arranged inclined in a tire circumferential direction, and

the first blocks (24A) having a shape that is longer in the tire circumferential direction and forming circumferential rows in which a plurality of the first blocks (24A) are arranged side by side in the tire circumferential direction, the first blocks (24A) in each of the circumferential rows being arranged in a staggered manner in the tire width direction, and a circumferential groove (22o) provided between the circumferential rows being formed in a curvilinear manner.

2. The tire (1) according to claim 1,
wherein the plurality of second blocks (24B) have a shape that is longer in the tire width direction and are provided arranged side by side in the tire circumferential direction, the second blocks (24A) comprising one end intersecting with a tire ground contact edge (T) and an other end terminating within the second region (B).

3. The tire (1) according to claim 1 or 2, wherein

first blocks (24A) located on an innermost side in the tire width direction with respect to the circumferential groove (22o) have a distance X1 from the tire equatorial plane (CL) to a groove wall (22A) of the circumferential groove (22o) closest to the tire equatorial plane (CL) in a range of $10\% \leq X1/TW \leq 35\%$ with respect to a tire ground contact width TW, and
first blocks (24A) located on an outermost side in the tire width direction with respect to the circumferential groove (22o) have a distance X2 from the tire equatorial plane to a groove wall (22B) of the circumferential groove (22) farthermost from the tire equatorial plane (CL) in a range of $16\% \leq X2/TW \leq 40\%$ with respect to the tire ground contact width TW.

4. The tire (1) according to any one of claims 1 to 3, wherein

the first blocks (24A) comprise two circumferential rows,
for a circumferential row close to the tire equatorial plane (CL), a shortest distance from the tire equatorial plane is D1 and a staggering offset in the tire width direction is Db1,
for a circumferential row far from the tire equatorial plane (CL), a shortest distance from the tire equatorial plane is D2 and a staggering offset in the tire width direction is Db2, and
with respect to the tire ground contact width TW, a relationship:

$$0\% < Db1/TW \leq 15\%,$$

$$0\% < Db2/TW \leq 15\%,$$

$$0\% \leq D1/TW \leq 25\%,$$

and

$$15\% \leq D2/TW \leq 39\%$$

is satisfied.

5. The tire (1) according to any one of claims 1 to 4, wherein the first blocks (24A) have a maximum ground contact width Wb1 in the tire width direction which satisfies a relationship $10\% \leq Wb1/TW \leq 25\%$ with respect to a tire ground contact width TW.

6. The tire (1) according to any one of claims 1 to 5, wherein the first blocks (24A) have a maximum ground contact length Lb1 in the tire circumferential direction which satisfies a relationship $45\% \leq Lb1/P1 \leq 95\%$ with respect to a pitch P1 in the tire circumferential direction.

7. The tire (1) according to any one of claims 1 to 6, wherein

the first blocks (24A) comprise an edge portion in the tire width direction, the edge portion comprising a step portion (24Ab) offsetting in the tire width direction,
a maximum ground contact width Wb1 of the first blocks (24A) in the tire width direction and a projecting width G1 of the step portion satisfy a relationship $1\% \leq G1/Wb1 \leq 40\%$, and
a maximum ground contact length Lb1 of the first blocks (24A) in the tire circumferential direction and a projecting length Le1 of the step portion satisfy a relationship $1\% \leq Le1/Lb1 \leq 50\%$.

8. The tire (1) according to any one of claims 1 to 7, wherein the second blocks (24B) have a zigzag shape in an extension direction and have a constant width.

9. The tire according to any one of claims 1 to 8, wherein an angle θ of the stud holes (25) that is inclined in the tire circumferential direction is in a range $3° \leq θ \leq 45°$.

**Patentansprüche**

1.  Reifen (1), umfassend:

    eine Mehrzahl von ersten Blöcken (24A), die in einem ersten Bereich (A) auf einer Seite in Reifenbreitenrichtung angeordnet sind, die durch eine Äquatorialebene des Reifens (CL) in einem Laufflächenabschnitt (2) abgegrenzt ist; und eine Mehrzahl von zweiten Blöcken (24B), die in einem zweiten Bereich (B) auf einer anderen Seite in Reifenbreitenrichtung angeordnet sind, die durch die Äquatorialebene des Reifens (CL) in dem Laufflächenabschnitt (2) abgegrenzt ist, Bolzenstifte (8), die in den Reifenbodenkontaktoberflächen (21) der ersten Blöcke (24A) und der zweiten Blöcke (24B) montiert sind, wobei eine Mehrzahl von Bolzenlöchern (25), in denen die Bolzenstifte (8) der ersten Blöcke (24A) angeordnet sind, in Reifenumfangsrichtung geneigt eingerichtet sind, und die ersten Blöcke (24A) eine Form aufweisen, die in Reifenumfangsrichtung länger ist und Umfangsreihen formt, in denen eine Mehrzahl der ersten Blöcke (24A) in Reifenumfangsrichtung nebeneinander eingerichtet sind, wobei die ersten Blöcke (24A) in jeder der Umfangsreihen in Reifenbreitenrichtung in einer gestaffelten Weise eingerichtet sind, und eine Umfangsrille (22o), die zwischen den Umfangsreihen bereitgestellt ist, in einer krummlinigen Weise geformt ist.

2.  Reifen (1) gemäß Anspruch 1, wobei die Mehrzahl von zweiten Blöcken (24B) eine Form aufweisen, die in Reifenbreitenrichtung länger ist und in Reifenumfangsrichtung nebeneinander bereitgestellt ist, die zweiten Blöcke (24A) umfassend ein Ende, das sich mit einem Reifenbodenkontaktrand (T) überschneidet, und ein anderes Ende, das innerhalb des zweiten Bereichs (B) endet.

3.  Reifen (1) gemäß Anspruch 1 oder 2, wobei

    erste Blöcke (24A), die sich auf einer innersten Seite in der Reifenbreitenrichtung in Bezug auf die Umfangsrille (22o) befinden, einen Abstand X1 von der Äquatorialebene des Reifens (CL) zu einer Rillenwand (22A) der Umfangsrille (22o), die der Äquatorialebene des Reifens (CL) am nächsten liegt, in einem Bereich von 10% ≤ X1/TW ≤ 35% in Bezug auf eine Reifenbodenkontaktbreite TW aufweisen, und erste Blöcke (24A), die sich auf einer äußersten Seite in der Reifenbreitenrichtung in Bezug auf die Umfangsrille (22o) befinden, einen Abstand X2 von der Äquatorialebene des Reifens zu einer Rillenwand (22B) der Umfangsrille (22), die von der Äquatorialebene des Reifens (CL) am weitesten entfernt liegt, in einem Bereich von 16% ≤ X2/TW ≤40% in Bezug auf die Reifenbodenkontaktbreite TW aufweisen.

4.  Reifen (1) gemäß einem der Ansprüche 1 bis 3, wobei

    die ersten Blöcke (24A) zwei Umfangsreihen umfassen, für eine Umfangsreihe nahe der Äquatorialebene des Reifens (CL) ein kürzester Abstand von der Äquatorialebene des Reifens D1 ist und ein Staffelungsversatz in der Reifenbreitenrichtung Db1 ist, für eine Umfangsreihe, die von der Äquatorialebene des Reifens (CL) weit entfernt ist, ein kürzester Abstand von der Äquatorialebene des Reifens D2 ist und ein Staffelungsversatz in der Reifenbreitenrichtung Db2 ist, und in Bezug auf die Reifenbodenkontaktbreite TW ein Verhältnis:

    $$0\% < Db1/TW \le 15\%,$$

    $$0\% < Db2/TW \le 15\%,$$

    $$0\% \le D1/TW \le 25\%$$

    und

    $$15\% \le D2/TW < 39\%$$

    erfüllt ist.

5.  Reifen (1) gemäß einem der Ansprüche 1 bis 4, wobei die ersten Blöcke (24A) eine maximale Bodenkontaktbreite Wb1 in der Reifenbreitenrichtung aufweisen, die ein Verhältnis von 10% ≤Wb1/TW≤25% in Bezug auf eine Reifenbodenkontaktbreite TW erfüllt.

6.  Reifen (1) gemäß einem der Ansprüche 1 bis 5, wobei die ersten Blöcke (24A) eine maximale Bodenkontaktlänge Lb1 in der Reifenumfangsrichtung aufweisen, die ein Verhältnis von 45% ≤ Lb1/P1 ≤ 95% in Bezug auf einen Grad P1 in der Reifenumfangsrichtung erfüllt.

7.  Reifen (1) gemäß einem der Ansprüche 1 bis 6, wobei

    die ersten Blöcke (24A) einen Randabschnitt in der Reifenbreitenrichtung umfassen, der Randabschnitt umfassend einen Stufenabschnitt (24Ab), der sich in der Reifenbreitenrichtung versetzt,

eine maximale Bodenkontaktbreite Wb1 des ersten Blocks (24A) in der Reifenbreitenrichtung und eine vorstehende Breite G1 des Stufenabschnitts ein Verhältnis von 1% $\leq$ G1/Wb1 $\leq$ 40% erfüllen; und

eine maximale Bodenkontaktlänge Lb1 des ersten Blocks (24A) in der Reifenumfangsrichtung und eine vorstehende Länge Le1 des Stufenabschnitts ein Verhältnis von 1% $\leq$ Le1/Lb1 $\leq$ 50% erfüllen.

8. Reifen (1) gemäß einem der Ansprüche 1 bis 7, wobei die zweiten Blöcke (24B) eine Zickzackform in einer Erstreckungsrichtung aufweisen und eine konstante Breite aufweisen.

9. Reifen gemäß einem der Ansprüche 1 bis 8, wobei ein Winkel θ der Bolzenlöcher (25), der in der Reifenumfangsrichtung geneigt ist, in einem Bereich von 3° $\leq$ θ $\leq$ 45° liegt.

**Revendications**

1. Pneu (1), comprenant:

une pluralité de premiers blocs (24A) disposés dans une première région (A) sur un côté dans une direction de largeur de pneu délimitée par un plan équatorial de pneu (CL) dans une partie de bande de roulement (2) ; et

une pluralité de seconds blocs (24B) disposés dans une seconde région (B) sur un autre côté dans la direction de la largeur du pneu délimitée par le plan équatorial du pneu (CL) dans la partie de bande de roulement (2),

des goujons (8) montés dans des surfaces de contact au sol (21) du pneu des premiers blocs (24A) et des seconds blocs (24B), une pluralité de trous de goujon (25) dans lesquels les goujons (8) des premiers blocs (24A) sont disposés d'une manière inclinée dans une direction circonférentielle du pneu, et

les premiers blocs (24A) ayant une forme qui est plus longue dans la direction circonférentielle du pneu et formant des rangées circonférentielles dans lesquelles une pluralité des premiers blocs (24A) sont agencés côte à côte dans la direction circonférentielle du pneu, les premiers blocs (24A) dans chacune des rangées circonférentielles étant agencés en quinconce dans la direction de la largeur du pneu, et une rainure circonférentielle (22o) prévue entre les rangées circonférentielles étant formée d'une manière curviligne.

2. Pneu (1) selon la revendication 1, dans lequel la pluralité de seconds blocs (24B) ont une forme qui est plus longue dans la direction de la largeur du pneu et sont agencés côte à côte dans la direction circonférentielle du pneu, les seconds blocs (24A) comprenant une extrémité croisant un bord de contact au sol (T) du pneu et une autre extrémité se terminant à l'intérieur de la seconde région (B).

3. Pneu (1) selon la revendication 1 ou 2, dans lequel

des premiers blocs (24A) situés sur un côté le plus interne dans la direction de la largeur du pneu par rapport à la rainure circonférentielle (22o) ont une distance X1, depuis le plan équatorial du pneu (CL) jusqu'à une paroi de rainure (22A) de la rainure circonférentielle (22o) la plus proche du plan équatorial du pneu (CL), dans une plage de 10 % $\leq$ X1/TW $\leq$ 35 % par rapport à une largeur de contact au sol du pneu TW, et des premiers blocs (24A) situés sur un côté le plus externe dans la direction de la largeur du pneu par rapport à la rainure circonférentielle (22o) ont une distance X2, depuis le plan équatorial du pneu jusqu'à une paroi de rainure (22B) de la rainure circonférentielle (22) la plus éloignée du plan équatorial du pneu (CL), dans une plage de 16 % $\leq$ X2/TW $\leq$ 40 % par rapport à la largeur de contact au sol du pneu TW.

4. Pneu (1) selon l'une quelconque des revendications 1 à 3, dans lequel

les premiers blocs (24A) comprennent deux rangées circonférentielles, pour une rangée circonférentielle proche du plan équatorial du pneu (CL), une distance la plus courte par rapport au plan équatorial du pneu est D1 et un décalage en quinconce dans la direction de la largeur du pneu est Db1, pour une rangée circonférentielle éloignée du plan équatorial du pneu (CL), une distance la plus courte par rapport au plan équatorial du pneu est D2 et un décalage en quinconce dans la direction de la largeur du pneu est Db2, et par rapport à la largeur de contact au sol du pneu TW, une relation de :

$$0 \% < Db1/TW \leq 15 \%,$$

$$0 \% < Db2/TW \leq 15 \%,$$

$$0 \% \leq D1/TW \leq 25 \%,$$

et

$$15 \ \% \le D2/TW < 39 \ \%$$

est satisfaite.

5.  Pneu (1) selon l'une quelconque des revendications 1 à 4, dans lequel les premiers blocs (24A) ont une largeur maximale de contact au sol Wb1 dans la direction de la largeur du pneu qui satisfait à une relation de 10 % ≤ Wb1/TW ≤ 25 % par rapport à une largeur de contact au sol du pneu TW.

6.  Pneu (1) selon l'une quelconque des revendications 1 à 5, dans lequel les premiers blocs (24A) ont une longueur maximale de contact au sol Lb1 dans la direction circonférentielle du pneu qui satisfait à une relation de 45 % ≤ Lb1/P1 ≤ 95 % par rapport à un pas P1 dans la direction circonférentielle du pneu.

7.  Pneu (1) selon l'une quelconque des revendications 1 à 6, dans lequel

    les premiers blocs (24A) comprennent une partie de bord dans la direction de la largeur du pneu, la partie de bord comprenant une partie étagée (24Ab) décalée dans la direction de la largeur du pneu,
    une largeur maximale de contact au sol Wb1 des premiers blocs (24A) dans la direction de la largeur du pneu et une largeur en saillie G1 de la partie étagée satisfont à une relation de 1 % ≤ G1/Wb1 ≤ 40 %, et
    une longueur maximale de contact au sol Lb1 des premiers blocs (24A) dans la direction circonférentielle du pneu et une longueur en saillie Le1 de la partie étagée satisfont à une relation de 1 % ≤ Le1/Lb1 ≤ 50 %.

8.  Pneu (1) selon l'une quelconque des revendications 1 à 7, dans lequel les seconds blocs (24B) ont une forme en zigzag dans une direction d'extension et ont une largeur constante.

9.  Pneu selon l'une quelconque des revendications 1 à 8, dans lequel un angle θ des trous de goujon (25) qui est incliné dans la direction circonférentielle du pneu est dans une plage de 3° ≤ θ ≤ 45°.

FIG. 1

FIG. 2

## FIG. 3

FIG. 4

TIRE WIDTH DIRECTION

23

24A

24Aa

25

24Ab

θ

22

25

Lb1

TIRE
CIRCUMFERENTIAL
DIRECTION

Le1

24Ab

25

G1

23

Wb1

# FIG. 5

| | CONVENTIONAL EXAMPLE | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 | EXAMPLE 12 | EXAMPLE 13 | EXAMPLE 14 | EXAMPLE 15 |
|---|---|---|---|---|---|---|---|---|---|---|---|---|---|---|---|---|
| TREAD PATTERN SYMMETRIC OR ASYMMETRIC | SYMMETRIC | ASYMMETRIC | ASYMMETRIC | ASYMMETRIC | ASYMMETRIC | ASYMMETRIC | ASYMMETRIC | ASYMMETRIC | ASYMMETRIC | ASYMMETRIC | ASYMMETRIC | ASYMMETRIC | ASYMMETRIC | ASYMMETRIC | ASYMMETRIC | ASYMMETRIC |
| TW | 150 | 150 | 150 | 150 | 150 | 150 | 150 | 150 | 150 | 150 | 150 | 150 | 150 | 150 | 150 | 150 |
| X1/TW[%] | - | 20 | 10 | 35 | 20 | 20 | 20 | 20 | 20 | 20 | 20 | 20 | 20 | 20 | 20 | 20 |
| X2/TW[%] | - | 33 | 16 | 40 | 33 | 33 | 33 | 33 | 33 | 33 | 33 | 33 | 33 | 33 | 33 | 33 |
| Db1/TW[%] | - | 4 | 4 | 4 | 1 | 15 | 4 | 4 | 4 | 4 | 4 | 4 | 4 | 4 | 4 | 4 |
| Db2/TW[%] | - | 4 | 4 | 4 | 1 | 15 | 4 | 4 | 4 | 4 | 4 | 4 | 4 | 4 | 4 | 4 |
| D1/TW[%] | - | 3 | 3 | 3 | 3 | 3 | 0 | 25 | 3 | 3 | 3 | 3 | 3 | 3 | 3 | 3 |
| D2/TW[%] | - | 30 | 30 | 30 | 30 | 30 | 15 | 39 | 30 | 30 | 30 | 30 | 30 | 30 | 30 | 30 |
| Wb1/TW[%] | - | 20 | 20 | 20 | 20 | 20 | 20 | 20 | 10 | 25 | 20 | 20 | 20 | 20 | 20 | 20 |
| Lb1/P1[%] | - | 80 | 80 | 80 | 80 | 80 | 80 | 80 | 80 | 80 | 45 | 95 | 80 | 80 | 80 | 80 |
| G1/Wb1[%] | - | 18 | 18 | 18 | 18 | 18 | 18 | 18 | 18 | 18 | 18 | 18 | 1 | 40 | 18 | 18 |
| Le1/Lb1[%] | - | 30 | 30 | 30 | 30 | 30 | 30 | 30 | 30 | 30 | 30 | 30 | 30 | 30 | 1 | 50 |
| STRAIGHT-LINE PERFORMANCE | 100 | 104 | 103 | 101 | 103 | 103 | 101 | 103 | 103 | 103 | 103 | 103 | 103 | 103 | 102 | 103 |
| TURNING PERFORMANCE | 100 | 104 | 101 | 103 | 103 | 103 | 103 | 101 | 103 | 103 | 103 | 103 | 103 | 103 | 102 | 103 |
| PIN DROP NUMBER | 3 | 0 | 0 | 0 | 0 | 0 | 0 | 0 | 2 | 0 | 2 | 0 | 0 | 2 | 2 | 0 |

FIG. 6

**EP 3 988 338 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4556682 B